# EUROPÄISCHE PATENTSCHRIFT

(11) **EP 2 065 991 B1**
(45) Veröffentlichungstag und Bekanntmachung des Hinweises auf die Patenterteilung: **04.04.2012**
(21) Anmeldenummer: 08019572.0
(22) Anmeldetag: 08.11.2008
(51) Int. Cl.: H02G 3/14

(54) **Anschlussdose für Photovoltaikpaneele**
Connection socket for photovoltaic panels
Boîte de jonction pour panneaux photovoltaïques

(30) Priorität: 27.11.2007 DE 102007057021
(43) Veröffentlichungstag der Anmeldung: 03.06.2009
(73) Patentinhaber: Lumberg Connect GmbH, 58579 Schalksmühle (DE)
(72) Erfinder: Richter, Michael, 58579 Schalksmühle (DE)
(74) Vertreter: Ostriga, Sonnet, Wirths & Roche

(56) Entgegenhaltungen:
- EP-A- 0 736 941
- EP-A- 1 058 362
- WO-A-2007/072519
- FR-A- 2 855 333

## Beschreibung

Die Erfindung betrifft eine Anschlussdose für Photovoltaikpaneele, die auf der Rückseite des Photovoltaikpaneels montiert ist und im Inneren Anschlusselemente trägt, die der Verbindung von spannungsführenden paneelseitigen Leitern mit Versorgungsleitungen dienen, vermittels derer die durch die Solarpaneele produzierte Elektrizität zur Einspeiseeinrichtung in das Elektrizitätsnetz geführt wird, mit einem zumindest zweigeteilten Gehäuse, umfassend einen Deckel und ein Bodenteil.

Derartige Anschlussdosen für Photovoltaikpaneele sind aus dem offenkundig vorbenutzten Stand der Technik hinlänglich bekannt. Sie bestehen in aller Regel aus wenigstens zwei Gehäuseteilen, nämlich einem schalenförmigen Bodenteil, in welchem diverse Anschluss-und Regelelemente gelagert sind und einem dieses Bodenteil verschließenden Deckel.

Diese Anschlussdosen sind in der Regel auf der Rückseite von Solarpaneelen angeordnet und zumeist mit diesen verklebt. Folienartige Flachbandleiter, über welche die vom Solarpaneel erzeugte Elektrizität in eine Versorgungsleitung eingespeist wird, sind in die Anschlussdose geführt und dort von Anschlussklemmen gehalten. Ebenfalls in die Anschlussdose eingeführt sind Enden von Versorgungsleitungen, welche gegebenenfalls unter Vermittlung von Regelbauteilen ebenfalls über Klemm- oder Schraubkontaktierung an die Folienleiter angebunden werden.

An gattungsgemäße Anschlussdosen werden, was ihre Langlebigkeit anbelangt, ausgesprochen hohe Anforderungen gestellt. Eine Anschlussdose muss wenigstens die prognostizierte Mindestlebensdauer eines Solarpaneels, in der Regel 25 Jahre, unbeschadet von Wettereinflüssen, wie starken Temperaturschwankungen, Sonneneinstrahlung und ähnliches, wie auch Umwelteinflüssen, beispielsweise Luftschadstoffen, standhalten.

Ganz überwiegend werden Deckel und Bodenteil im Stand der Technik über aufwendig herzustellende Schamierteile aneinander angebunden oder liegen als zwei bei offener Anschlussdose nicht miteinander gekoppelte Teile vor. Aus Gründen der Montagefreundlichkeit aber auch aufgrund von Vorschriften und Normen ist jedoch eine Deckel und Bodenteil der Anschlussdose aneinander koppelnde Verbindung gewünscht bzw. gefordert.

Aufgabe der Erfindung ist es, eine Anbindung von Deckel und Bodenteil einer Anschlussdose zu schaffen, welche gegenüber einer Schamieranordnung weniger aufwendiger zu produzieren ist, gleichzeitig aber den hohen Anforderungen an die Witterungsbeständigkeit bei vorteilhafter Anschlussdosen-Vorkonfektionierung gewährleistet.

Gelöst wird die Aufgabe von einer Anschlussdose mit den Merkmalen des Anspruches 1, insbesondere mit den kennzeichnenden Merkmalen, wonach Deckel und Bodenteil mittels eines flexiblen Haltelementes miteinander unverlierbar verbunden sind, welches bei geschlossener Anschlussdose innerhalb der Dose gelagert ist.

Hierbei ist insbesondere daran gedacht, dass das Halteelement ein Kunststoffstrang, insbesondere aus Polyamid ist.

Die Erfindung verknüpft in augenscheinlich ausgesprochen vorteilhafter Weise die in der Produktion wenig aufwendige Ausführungsform, bei welcher Deckel und Bodenteil gelenklos sind. Diese Ausführungsform hat grundsätzlich erhebliche Vorteile beim Schließen der Dose. Beispielsweise ermöglicht es diese Ausführungsform im Deckelbereich angeordnete Dichtungen beim Aufsetzen des Deckels auf das Bodenteil gleichmäßig anzudrücken. Im Falle einer Ausführungsform mit Scharniergelenk wird die Dichtung während des klappenartigen Schließvorgangs sequentiell zwischen Deckel und Bodenteil verquetscht. Dabei weicht die Dichtung in Richtung der noch offenen Bereiche der Anschlussdose aus, so dass nach Abschluss des Schließvorganges ein gleichmäßiger Anpressdruck zwischen Deckel und Dichtung nicht gewährleistet ist.

Andererseits sind Deckel und Bodenteil über das flexible Halteelement unverlierbar aneinander angeordnet, so dass die Anschlussdose als vorkonfektionierte Einheit herstellbar ist. Auch ist bei der Montage und Wartung der Anschlusselemente der Deckel einfach vom Bodenteil entfernbar, ohne dass er jedoch - wie bei Anschlussdosen ohne Verbindung zwischen Deckel und Bodenteil - beiseite gelegt und verloren gehen kann.

Da das flexible Halteelement bei geschlossener Anschlussdose innerhalb der Dose gelagert ist, kann das Halteelement selbst aus einem vergleichsweise kostengünstigen Material, beispielsweise Polyamid hergestellt sein, an welches die hohen Anforderungen hinsichtlich Witterungsbeständigkeit und Widerstand gegen Umwelteinflüsse nicht gestellt werden müssen. Das Halteelement wird schließlich durch die die entsprechenden Anforderungen erfüllende Anschlussdose vor diesen Einflüssen geschützt.

Besonders bevorzugt ist eine Ausführungsform, bei welcher Deckel und Bodenteil innenseitig Ösen ausbilden, in die das flexible Halteelement eingreift, insbesondere wenn die Ösen werkstoffeinheitlich-stoffschlüssig von Deckel bzw. Bodenteil der Anschlussdose ausgebildet sind. In solche Ösen kann das Haltemittel leicht eingeführt und sowohl an Deckel als auch am Bodenteil sicher befestigt werden. Besonders bewährt haben sich Anschlussdosen, die aus Kunststoff, insbesondere aus Polycarbonat oder aus Polyphenylenoxid (PPO) ausgebildet sind und insbesondere im Spritzgießverfahren hergestellt sind, da beide Kunststoffe ausgesprochen witterungsbeständig sind.

Eine alternative Ausführungsform kennzeichnet sich dadurch, dass das Halteelement werkstoffeinheitlich-stoffschlüssig mit dem Deckel und Bodenteil der Ausschlussdose ausgebildet ist.

Letztlich kennzeichnet sich eine besonders bevorzugte Ausführungsform dadurch, dass das Halteelement an seinen die Ösen durchgreifenden Enden zumindest einen, bevorzugt jedoch zwei Schenkel aufweist, die gemeinsam mit den Enden des Halteelementes pfeilartige Endabschnitte bilden und lediglich im Bereich der jeweiligen Pfeilspitze mit dem Halteelement verbunden sind und der Abstand der freien Schenkelenden zueinander größer ist, als die Weite der jeweiligen Öse.

Ein solcher Kunststoffstrang, beispielsweise als Kunststofffaden bzw. Kunststoffbändchen ausgeführt, lässt sich mit seinen beiden Enden einfach durch die Ösen hindurch stecken, wobei sich die zwei Schenkel während des Einsteckvorganges an den Kunststoffstrang anlegen und nach Hindurchtreten durch die Osenöffnung sich rückstellelastisch in ihre ursprüngliche Position zurückbewegen. Diese hintergreifen die Ösenöffnung dann widerhakenartig.

Weitere Vorteile sowie ein besseres Verständnis der Erfindung ergeben sich aus der nachfolgenden Zeichnungsbeschreibung. Es zeigen:
- Fig. 1: eine Anschlussdose in geöffnetem Zustand,
- Fig. 2: eine Anschlussdose in geschlossenem Zustand in Ansicht von unten,
- Fig. 3: eine schematische Darstellung eines Kunststoffstranges zur Verbindung von Deckel und Bodenteil einer Anschlussdose.

In den Zeichnungen ist eine Anschlussdose zur Anordnung auf der Rückseite eines nicht dargestellten Photovoltaikpaneels insgesamt mit der Bezugsziffer 10 gekennzeichnet.

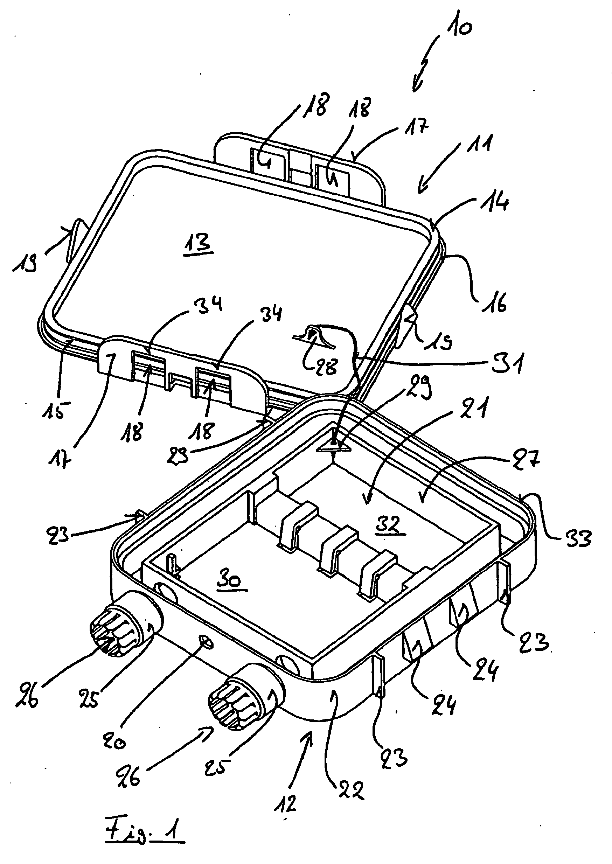

Die Anschlussdose 10 besteht im vorliegenden Ausführungsbeispiel aus zwei Teilen, nämlich einem Deckel 11 und einem etwa topfförmigen Bodenteil 12. Der Deckel 11 ist in Fig. 1 in seiner Ansicht auf die Innenfläche 13 dargestellt, welche von einem Kragen 14 umgeben ist. Der Kragen 14 weist eine außenumfängliche Nut 15 auf, in der ein umlaufender, nicht dargestellter, Dichtungsring einliegt. Ein Flanschrand 16 schließt sich an den Kragen 14 an. An sich gegenüberliegenden Deckelseiten sind je eine Befestigungslasche 17 mit jeweils zwei Rastöffnungen 18 angeordnet, die der Befestigung des Deckels 11 auf dem Bodenteil 12 dienen. An den nicht mit Befestigungslaschen versehenen Seiten des Deckels 11 befinden sich Abdecklaschen 19, welche Klimatisierungsöffnungen 20 des Bodenteils 12 verschließen.

Das Bodenteil 12 mit seinem topfartig gestalteten Grundkörper weist einen Innenraum 21 auf, welcher über die vorerwähnten Klimatisierungsöffnungen 20 auch bei geschlossener Anschlussdose 10 mit der Außenumgebung in begrenztem Maße für einen Klimaaustausch in Verbindung steht. Der den Innenraum 21 bildende Bodenteil-Kragen 22 weist an zwei sich gegenüberliegenden Seiten paarweise zueinander beabstandet Führungsschienen 23 auf, zwischen denen Rastnasen 24 angeordnet sind. Zwei den Bodenteil-Kragen 22 durchbrechende, mit Zugentlastungen 25 versehene Öffnungen 26 erlauben das Einführen von nicht dargestellten Versorgungsleitungen in den Innenraum 21. Der Innenraum 21 umfaßt einen Halterahmen 27 zur Anordnung von nicht dargestellten Kontakt- und Regelelementen.

An der Innenfläche 13 des Deckels 11 ist werkstoffeinheitlich-stoffschlüssig eine erste Öse 28 und innerhalb des Innenraumes 21 des Bodenteiles 11 - im vorliegenden Ausführungsbeispiel werkstoffeinheitlich-stoffschlüssig mit dem Halterahmen 27 verbunden - ist eine zweite Öse 29 ausgebildet. Selbstverständlich kann die zweite Öse 29 an einem beliebigen anderen Element des Bodenteils 12, beispielsweise an der Innenfläche des Bodenteil-Kragens 22 oder an der Bodenfläche 30 angeordnet sein. Durch die Ösenöffnungen der Ösen 28 und 29 ist ein Kunststoffstrang 31 geführt und verbindet Deckel 11 und Bodenteil 12 unverlierbar miteinander.

In einem Bereich ist die Bodenfläche 30 mit einer zum nicht dargestellten Solarpaneel gerichteten Anschlussöffnungen 32 versehen, durch welche ebenfalls nicht dargestellte Flachbandleiter der Solarpaneele in die Anschlussdose 10 eingebracht werden, mittels derer die erzeugte Elektrizität abgeführt wird,.

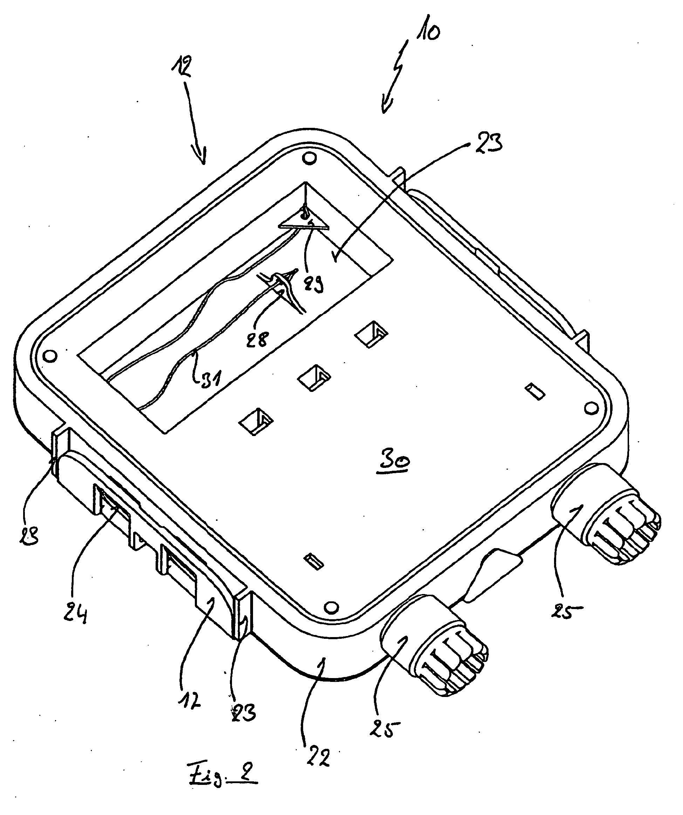

Fig. 2 zeigt die Anschlussdose 10 in geschlossenem Zustand. Um die Anschlussdose 10 zu schließen, wurde zunächst der Deckel derart gegenüber dem Bodenteil 12 positioniert, dass die Befestigungslaschen 17 jeweils zwischen zwei paarweise einander zugeordnete Führungsschienen 23 zur Anlage kommen. Beim Aufdrücken des Deckels 11 auf das Bodenteil 12 gleiten die Befestigungslaschen 17 über die sich keilförmig in Richtung Bodenfläche 30 des Bodenteils 12 hin erweiternden Rastnasen 24 und werden vom Bodenteil-Kragen 22 weggespreizt. Schließlich taucht der Kragen 14, innenumfänglich am Bodenteil-Kragen 22 vorbei gleitend, in den Innenraum 21 des Bodenteils 12 ein, wobei die nicht dargestellte, in der Nut 15 einliegende Dichtung zwischen Kragen 14 und Bodenteil-Kragen 22 anliegt und die Anschlussdose 10 luftdicht verschließt. In dem Moment, wo der Flanschrand 16 des Deckels auf dem von der Bodenfläche 30 wegweisenden Rand 33 des Bodenteil-Kragens 22 zur Anlage kommt, tauchen die Rastnasen 24 in die korrespondierenden Rastöffnungen 18 der Befestigungslaschen 17 des Deckels 11 ein, welche sich rückstellelastisch an den Bodenteil-Kragen 22 anlegen, so dass die Rastnasen 24 die Raststege 34 der Befestigungslaschen 17 hintergreifen. Hierdurch ist der Deckel 11 sicher am Bodenteil 12 gehalten.

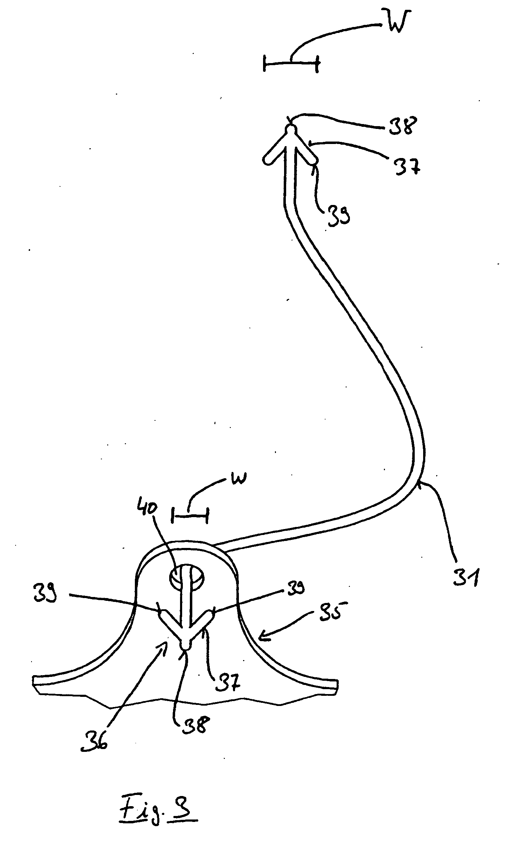

Fig. 3 zeigt in einer schematischen Darstellung den Kunststoffstrang 31, der einseitig eine exemplarisch dargestellte Öse 35, welche für die erste Öse 28 bzw. die zweite Öse 29 in Fig. 1 bzw. Fig. 2 steht, durchgreift.

Der Kunststoffstrang 31 weist an seinen Enden 36 jeweils zwei Schenkel 37 auf, mittels derer der Kunststoffstrang 31 pfeilartige Endabschnitte ausbildet. Die Schenkel 37 sind lediglich im Bereich der Pfeilspitze 38 mit dem Kunststoffstrang 31 verbunden, die freien Enden 39 der Schenkel 37 weisen hingegen zueinander einen Abstand W auf, welcher größer ist als die Weite w der Ösenöffnung 40.

Um den Deckel 11 mit dem Bodenteil 12 durch den Kunststoffstrang 31 zu verbinden, wie es in den Fig. 1 und 2 dargestellt ist, wird der Kunststoffstrang 31 mit seinem jeweiligen Ende 37 - die Pfeilspitze 38 voran - durch die Ösenöffnung 40 geschoben. Dabei drängt die im Vergleich zum Abstand W kleine Ösenöffnung die freien Enden 39 der Schenkel 37 in Richtung Kunststoffstrang 31 zusammen. Nach dem Hindurchtauchen der Kunststoffstrang-Enden 36 - genauer der freien Schenkelenden 39 - durch die Ösenöffnung 40 weichen die freien Enden 39 rückstellelastisch in ihre Ausgangslage zurück und hintergreifen so die Ösenöffnung 40 widerhakenartig. Hierdurch wird ein Herausrutschen des Kunststoffstranges 31 aus der Öse 35 verhindert. Gleichzeitig werden so die vorher unverbundenen Teile 11 und 12 der Anschlussdose aneinander gehalten. Es ist durchaus denkbar, statt der hier vereinfacht dargestellten zwei Schenkel 37 die Enden 36 mit mehreren, trichterartig angeordneten Schenkeln 37 zu versehen, um die Halterung des Stranges 31 in der Öse 35 zu verbessern.

In einer weiteren, nicht dargestellten Ausführungsform kann statt zwei eine Pfeilspitze bildende Schenkel 37 auch jeweils nur ein Schenkel 37 an den Enden 36 angeordnet sein. Es ist wiederum auch denkbar, das nur ein Ende 36 widerhakenartig ausgebildet ist, also mit einem oder mehreren Schenkeln 37 versehen ist. Das andere Ende wäre dann auf andere Weite mit Deckel 11 oder Bodenteil 12 fest verbunden, beispielsweise durch eine stoffschlüssige Verbindung.

## Patentansprüche

1. Anschlussdose für Photovoltaikpaneele, die auf der Rückseite des Photovoltaikpaneels montiert ist und im Inneren Anschlusselemente trägt, die der Verbindung von spannungsführenden paneelseitigen Leitern mit Versorgungsleitungen dienen, vermittels derer die durch die Solarpaneele produzierte Elektrizität zur Einspeiseeinrichtung in das Elektrizitätsnetz geführt wird, mit einem zumindest zweigeteilten Gehäuse, umfassend einen Deckel (11) und ein Bodenteil (12), wobei Deckel (11) und Bodenteil (12) mittels eines flexiblen Haltelementes (31) miteinander unverlierbar verbunden sind und das Halteelement bei geschlossener Anschlussdose (10) innerhalb der Dose (10) gelagert ist, **dadurch gekennzeichnet, dass** Deckel (11) und Bodenteil (12) innenseitig Ösen (28, 29, 35) ausbilden, in die das flexible Halteelement (31) eingreift und die Ösen (28, 29, 35) werkstoffeinheitlich-stoffschlüssig von Deckel (11) bzw. Bodenteil (12) der Anschlussdose (10) ausgebildet sind.

2. Anschlussdose nach Anspruch 1, **dadurch gekennzeichnet, dass** die Anschlussdose (10) aus Kunststoff, insbesondere aus Polycarbonat oder aus Polyphenylenoxid ausgebildet ist und insbesondere im Spritzgießverfahren hergestellt ist.

3. Anschlussdose nach Anspruch 1, **dadurch gekennzeichnet, dass** das Halteelement (31) werkstoffeinheitlich-stoffschlüssig mit dem Deckel (11) und Bodenteil (12) der Anschlussdose (10) ausgebildet ist.

4. Anschlussdose nach einem der vorhergehenden Ansprüche, **dadurch gekennzeichnet, dass** das Haltelement (31) ein Kunststoffstrang (31), insbesondere aus Polyamid ist.

5. Anschlussdose nach einem der Ansprüche 1, 2 oder 4, **dadurch gekennzeichnet, dass** das Halteelement (31) an seinen die Ösen (28, 29, 35) durchgreifenden Enden (36) zumindest zwei Schenkel (37) aufweist, die gemeinsam mit den Enden (36) des Halteelementes (31) pfeilartige Endabschnitte bilden und lediglich im Bereich der jeweiligen Pfeilspitze (38) mit dem Halteelement verbunden sind und der Abstand (W) der freien Schenkelenden (39) zueinander größer ist, als die Weite (w) der jeweiligen Öse (28, 29, 35).

6. Anschlussdose nach einem der Ansprüche 1, 2 oder 4, **dadurch gekennzeichnet, dass** das Halteelement (31) an wenigstens einem die Ösen (28, 29, 35) durchgreifenden Ende (36) zunächst einen Schenkel (37) aufweist, der einenends mit dem Ende (36) des Halteelements (31) verbunden ist und dessen freies Ende einen Abstand zum Halteelement (31) aufweist, der größer ist als die Weite (w) der jeweiligen Öse (28, 29, 35).

## Claims

1. Connector box for photovoltaic panels, which is mounted on the back of the photovoltaic panel and carries within it connecting elements which are used to connect voltage-carrying panel-side conductors to supply lines, by means of which the electricity which the solar panels produce is fed to the device for feeding into the electricity network, with a housing which is divided into at least two parts, including a cover (11) and a floor part (12), the cover (11) and the floor part (12) being undetachably joined to each other by means of a flexible holding element (31), and the holding element being carried within the box (10) when the connector box (10) is closed, **characterized in that** the cover (11) and floor part (12) on their inner sides form eyes (28, 29, 35), into which the flexible holding element (31) engages, and that the eyes (28, 29, 35) are formed of uniform material substance-to-substance from the cover (11) and floor part (12) of the connector box (10).

2. Connector box according to Claim 1, **characterized in that** the connector box (10) is made of plastic, in particular polycarbonate or polyphenylene oxide, and in particular is produced by the injection moulding method.

3. Connector box according to Claim 1, **characterized in that** the holding element (31) is formed of uniform material substance-to-substance with the cover (11) and floor part (12) of the connector box (10).

4. Connector box according to any one of the preceding claims, **characterized in that** the holding element (31) is a plastic slab (31), in particular of polyamide.

5. Connector box according to any one of Claims 1, 2 or 4, **characterized in that** the holding element (31), at its ends (36) which penetrate the eyes (28, 29, 35), has at least two legs (37), which together with the ends (36) of the holding element (31) form arrow-like end sections, and are joined to the holding element only in the region of the respective arrow tip (38), and that the distance (W) of the free leg ends (39) from each other is greater than the width (w) of the respective eye (28, 29, 35).

6. Connector box according to any one of Claims 1, 2 or 4, **characterized in that** the holding element (31), at at least one end (36) which penetrates the eyes (28, 29, 35), first has a leg (37), which at one end is joined to the end (36) of the holding element (31), and the free end of which has a distance from the holding element (31) which is greater than the width (w) of the respective eye (28, 29, 35).

## Revendications

1. Boîte de jonction pour des panneaux photovoltaïques qui est montée au dos du panneau photovoltaïque et porte, à l'intérieur, des éléments de raccordement qui servent à relier des conducteurs, côté panneau, sous tension à des lignes d'alimentation, par lesquelles l'électricité produite par les panneaux solaires est conduite au dispositif d'alimentation dans le réseau électrique, avec un boîtier au moins en deux parties, comprenant un couvercle (11) et une partie de fond (12), le couvercle (11) et la partie de fond (12) étant reliés ensemble, de manière imperdable, à l'aide d'un élément de retenue (31) flexible et l'élément de retenue étant logé, la boîte de jonction fermée (10), à l'intérieur de la boîte (10), **caractérisée en ce que** le couvercle (11) et la partie de fond (12) forment à l'intérieur des oeillets (28, 29, 35) dans lesquels l'élément de retenue (31) flexible est en prise et **en ce que** les oeillets (28, 29, 35) sont conçus d'un seul et même matériau, formant une continuité de matière, par le couvercle (11) ou la partie de fond (12) de la boîte de jonction (10).

2. Boîte de jonction selon la revendication 1, **caractérisée en ce que** la boîte de jonction (10) est en matière plastique, en particulier, en polycarbonate ou en polyphényloxyde et est fabriquée, en particulier, par moulage par injection.

3. Boîte de jonction selon la revendication 1, **caractérisée en ce que** l'élément de retenue (31) est conçu, d'un seul et même matériau formant une continuité de matière, avec le couvercle (11) et la partie de fond (12) de la boîte de jonction (10).

4. Boîte de jonction selon l'une des précédentes revendications, **caractérisée en ce que** l'élément de retenue (31) est un brin en matière plastique (31), en particulier, en polyamide.

5. Boîte de jonction selon l'une des revendications 1, 2 ou 4, **caractérisée en ce que** l'élément de retenue (31) présente au niveau de ses extrémités (36) traversant les oeillets (28, 29, 35) au moins deux branches (37) qui forment, ensemble, avec les extrémités (36) de l'élément de retenue (31) des sections d'extrémité de type flèche et qui sont reliées simplement dans la zone de chaque pointe de flèche (38) à l'élément de retenue et **en ce que** l'espacement (W) des extrémités libres des branches, l'une par rapport à l'autre, est supérieur à l'ampleur (w) de l'oeillet (28, 29, 35) respectif.

6. Boîte de jonction selon l'une des revendications 1, 2 ou 4, **caractérisée en ce que** l'élément de retenue (31) présente au niveau d'au moins une extrémité (36) traversant les oeillets (28, 29, 35) tout d'abord une branche (31) qui est, d'un côté, reliée à l'extrémité (36) de l'élément de retenue (31) et dont l'extrémité libre présente un espacement par rapport à l'élément de retenue (31) qui est supérieur à l'ampleur (w) de l'oeillet (28, 29, 35) respectif.
